# EUROPÄISCHE PATENTANMELDUNG

(11) **EP 3 386 227 A1**
(43) Veröffentlichungstag der Anmeldung: **10.10.2018**
(21) Anmeldenummer: 18165809.7
(22) Anmeldetag: 05.04.2018
(51) Int. Cl.: H04W 8/18, H04W 4/16, H04W 12/08

(54) **VERFAHREN ZUR VERWALTUNG MEHRERER SUBSKRIPTIONEN IN EINEM MOBILEN KOMMUNIKATIONSNETZWERK**

(30) Priorität: 06.04.2017 DE 102017205864
(71) Anmelder: Vodafone Holding GmbH, 40213 Düsseldorf (DE)
(72) Erfinder: Nozulak, Thorsten, 59399 Olfen (DE); Seifert, Ulrich, 40468 Düsseldorf (DE); Jacobs, Holger, 42117 Wuppertal (DE)
(74) Vertreter: Jostarndt Patentanwalts-AG

(57) **Zusammenfassung**

Die Erfindung betrifft ein Verfahren zur Verwaltung von Subskriptionen insbesondere zur Verwaltung von Diensten von Subskriptionen in mobilen Kommunikationsnetzwerken, wobei das Verfahren die folgenden Schritte umfasst:
- Registrieren einer ersten Subskription (132) in einer Subskriptionsverwaltungseinheit (200) eines mobilen Kommunikationsnetzwerkes (400, 401),
- Registrieren einer zweiten Subskription (134) in der Subskriptionsverwaltungseinheit (200),
- Freigeben einer Schaltung eines Dienstes für die erste Subskription (132) mittels der Subskriptionsverwaltungseinheit (200) durch die zweite Subskription (134) unabhängig von einem Aktivitätsstatus der ersten Subskription (132).

Die Erfindung betrifft zudem ein entsprechend eingerichtetes mobiles Endgerät (100, 101), eine Subskriptionsverwaltungseinheit (200) und ein System umfassend das mobile Endgerät (100, 101) und die Subskriptionsverwaltungseinheit (200). Die Erfindung betrifft schließlich ein entsprechendes Computerprogrammprodukt.

## Beschreibung

### Gebiet der Erfindung

Die Erfindung bezieht sich auf ein Verfahren zur Verwaltung mehrerer Subskriptionen in einem mobilen Kommunikationsnetzwerk. Die Erfindung bezieht sich des Weiteren auf ein entsprechend eingerichtetes Endgerät. Die Erfindung bezieht sich zudem auf eine entsprechend eingerichtete Subskriptionsverwaltungseinheit, sowie auf ein System das ein entsprechend eingerichtetes Endgerät und eine entsprechend eingerichtete Subskriptionsverwaltungseinheit aufweist. Die Erfindung bezieht sich schließlich auf ein entsprechendes Computerprogrammprodukt.

### Hintergrund der Erfindung

Ein Nutzer eines mobilen Kommunikationsnetzwerkes kann mehrere Subskriptionen zur Nutzung eines oder mehrerer mobiler Kommunikationsnetzwerke besitzen. Dies ermöglicht es zum Beispiel zwischen rein beruflicher und rein privater Nutzung zu trennen. Es ist möglich ausgehend von einer aktiven Subskription (zum Beispiel private Subskription) eine Rufweiterleitung für eingehende Kommunikationsanfragen für diese aktive private Subskription auf die berufliche Subskription einzurichten. Für die private Subskription eingehende Kommunikationsanfragen werden an die berufliche Subskription weitergeleitet, wenn die private Subskription vom aktiven Zustand in den inaktiven Zustand versetzt wird und die berufliche Subskription aktiviert wird. Dies ermöglicht es auch bei nicht aktiver Subskription, Kommunikationsanfragen für diese Subskription zu erhalten.

### Zusammenfassung der Erfindung

Es ist eine Aufgabe der vorliegenden Erfindung, ein verbessertes Verfahren zur Verwaltung mehrerer Subskriptionen insbesondere zur Verwaltung von Diensten von zwei, drei, vier oder mehr Subskriptionen in einem mobilen Kommunikationsnetzwerk zur Verfügung zu stellen.

Die Erfindung wird in den unabhängigen Ansprüchen beansprucht. Bevorzugte Ausführungsformen finden sich in den abhängigen Ansprüchen.

Diese Aufgabe wird gemäß eines ersten Aspektes durch ein Verfahren zur Verwaltung von Subskriptionen insbesondere zur Verwaltung von Diensten von zwei, drei, vier oder mehr Subskriptionen in mobilen Kommunikationsnetzwerken gelöst. Das Verfahren umfasst die folgenden Schritte:
- Registrieren einer ersten Subskription in einer Subskriptionsverwaltungseinheit eines mobilen Kommunikationsnetzwerkes,
- Registrieren einer zweiten Subskription in der Subskriptionsverwaltungseinheit,
- Freigeben einer Schaltung eines Dienstes für die erste Subskription mittels der Subskriptionsverwaltungseinheit durch die zweite Subskription unabhängig von einem Aktivitätsstatus der ersten Subskription.

Die erste Subskription und die zweite Subskription können dem gleichen Nutzer oder verschiedenen Nutzern eines mobilen Kommunikationsnetzwerkes zugeordnet sein. Das Verfahren ermöglicht es auf einfache Weise Dienste wie zum Beispiel die Einrichtung einer Rufweiterleitung oder einer automatischen Antwort auf eine Kommunikationsanfrage unabhängig vom Aktivitätsstatus der Subskription einzurichten bzw. anzupassen. Dem Nutzer ist es somit zum Beispiel möglich, eine private Subskription und eine berufliche Subskription, die mit unterschiedlichen Rufnummern (MSISDN) verknüpft sind, mittels der gerade aktiven Subskription zu verwalten. Der Nutzer kann zum Beispiel während er die berufliche Subskription nutzt auf einfache Weise eine Rufweiterleitung von der gerade nicht aktiven privaten Subskription auf die aktive berufliche Subskription schalten. Alternativ kann er aber auch eine Rufweiterleitung von der nicht aktiven privaten Subskription auf eine dritte Subskription schalten oder umschalten. Der Nutzer könnte somit zum Beispiel einen privaten Anruf erwarten. Er hatte zuvor eine Rufweiterleitung von der inaktiven privaten Subskription auf die aktive berufliche Subskription geschaltet. Berufliche Verpflichtungen halten den Nutzer aber für einen bestimmten Zeitraum davon ab, auf den privaten Anruf zu reagieren. Der Nutzer schaltet für diesen Zeitraum die Rufweiterleitung von seiner inaktiven privaten Subskription zur aktiven beruflichen Subskription auf eine Subskription seines/ihres Ehepartners um, damit der erwartete Anruf während des Zeitraums entgegengenommen werden kann. Diese einfache Verwaltung verschiedener Subskriptionen wird dadurch ermöglicht, dass die jeweilige Subskription in der Subskriptionsverwaltungseinheit registriert werden und weitere Subskriptionen einmalig autorisiert werden die jeweilige Subskription zu verwalten und/oder von ihr verwaltet zu werden. Es kann dabei bevorzugt sein, dass die erstmalige Registrierung in der Subskriptionsverwaltungseinheit im aktiven Zustand der Subskription erfolgt, um eine Autorisierung bzw. Authentisierung durch das mobile Kommunikationsnetzwerk zu ermöglichen. In diesem Zusammenhang ist es ebenfalls möglich die Dienste zu definieren, die durch die jeweils andere Subskription verwaltet werden dürfen. Die Kommunikation mit der Subskriptionsverwaltungseinheit zur Schaltung der Dienste wird dabei vorzugsweise durch Verschlüsselung geschützt. Die Verschlüsselung gewährleistet, dass das Verfahren nur durch autorisierte Subskriptionen durchgeführt wird. Jeder Subskription, die zum Beispiel durch eine zugehörige MSISDN charakterisiert ist, kann z.B. bei einem asymmetrischen Verschlüsselungsverfahren ein privater Schlüssel zugeordnet werden und der Subskriptionsverwaltungseinheit ein öffentlicher Schlüssel. Der jeweilige private Schlüssel kann zum Beispiel in einem mobilen Endgerät hinterlegt sein, dass zur Durchführung des Verfahrens verwendet werden kann. In Abhängigkeit von der Zahl von Subskriptionen, die einem mobilen Endgerät zugeordnet sind können auch mehrere unterschiedliche private Schlüssel in dem mobilen Endgerät hinterlegt sein, um eine eindeutige Zuordnung zu der jeweiligen Subskription zu ermöglichen.

Das beschriebene Verfahren ermöglicht es insbesondere, die durch ein eingebettetes oder elektronisches Teilnehmeridentifizierungsmodul (embedded UICC), der sogenannten eSIM (embedded Subscriber Identity Module) erweiterten Möglichkeiten bezüglich der Registrierung von zwei, drei oder mehr Subskriptionen effizient zu verwalten. Es ist nicht erforderlich die Schaltung eines Dienstes für eine bestimmte Subskription dadurch zu ermöglichen, dass diese Subskription aktiviert wird und die Schaltung durch die aktive Subskription durchgeführt wird. Dies ermöglicht es insbesondere auf einfache Weise verschiedene Subskription auf einem mobilen Endgerät zusammenzuführen, ohne dass die Identität der Subskription und zum Beispiel die Zahlungsmodalitäten (z.B. private Subskription wird privat bezahlt; berufliche Subskription wird durch den Arbeitgeber bezahlt) davon berührt werden. Das Verfahren kann dabei auf einfache Art und Weise mittels einer Anwendung, die auf den jeweiligen mobilen Endgerät gespeichert ist durchgeführt werden. Die Anwendung zeigt dem Nutzer die für die Verwaltung zur Verfügung stehenden Subskriptionen (eigene und gegebenenfalls fremde Subskriptionen). Des Weiteren kann die Anwendung derart ausgestaltet sein, dass der Nutzer die für die jeweilige Subskription zur Verfügung stehenden Dienste, die verwaltet werden können, zum Beispiel nach Auswahl der jeweiligen Subskription angezeigt bekommt. Es ist somit nicht erforderlich, dass der Nutzer die Menüstruktur des mobilen Endgeräts kennt, um die ihm zugänglichen Subskriptionen und zugehörigen Dienste effektiv zu verwalten. Das Verfahren kann zudem derart ausgestaltet sein, dass die gerade aktive Subskription automatisch in der Subskriptionsverwaltungseinheit registriert wird. Es kann zudem vorgesehen sein, dass das Verfahren derart ausgestaltet ist, dass zunächst geprüft wird, ob mehrere Subskription zum Beispiel auf einem mobilen Endgerät vorhanden sind. In einem zweiten Schritt werden die Subskriptionen vorzugsweise nacheinander aktiviert und erstmalig in der Subskriptionsverwaltungseinheit registriert. Anschließend ist es möglich für jede Subskription die Schaltung von Diensten unabhängig vom Aktivitätsstatus der Subskription durchzuführen. Das Verfahren kann insbesondere nach Aktivierung der zuvor beschriebenen Applikation auf einem mobilen Endgerät automatisch durchgeführt werden.

Das Verfahren kann zudem den zusätzlichen Schritt umfassen:
- Freigeben einer Schaltung eines Dienstes für die zweite Subskription durch die erste Subskription mittels der Subskriptionsverwaltungseinheit unabhängig von einem Aktivitätsstatus der zweiten Subskription. Die verschiedenen Subskriptionen können somit wechselseitig verwaltet werden.

Das Verfahren kann optional den zusätzlichen Schritt umfasst:
- Autorisieren der Freigabe des Dienstes für die erste Subskription in der Subskriptionsverwaltungseinheit durch den ersten Nutzer.

Insbesondere in dem Fall, dass die Subskription, für die ein Dienst geschaltet werden soll, einem anderen Nutzer zugeordnet ist, kann eine Autorisierung der Freigabe des Dienstes bevorzugt sein. Diese Autorisierung kann durch eine in der Subskriptionsverwaltungseinheit hinterlegte Autorisierung erfolgen. Alternativ kann aber auch eine explizite Autorisierung durch eine Anfrage an den Nutzer der jeweiligen Subskription erfolgen. Diese Anfrage kann zum Beispiel von der Subskriptionsverwaltungseinheit an den Nutzer der ersten Subskription versendet werden. Dieser erste Nutzer kann gemäß dem zuvor beschriebenen Beispiel der Ehepartner des Nutzers der zweiten Subskription sein. Die Anfrage kann direkt an die zuvor beschriebene Anwendung auf dem mobilen Endgerät des Nutzers der zweiten Subskription übermittelt werden, so dass der Nutzer der zweiten Subskription eine einfache Möglichkeit erhält, die Freigabe des Dienstes zu autorisieren. Die Anfrage kann alternativ auch mittels anderer Kommunikationsdienste erfolgen für die Kontaktdaten in der Subskriptionsverwaltungseinheit hinterlegt sind (SMS, E-Mail, Instant Messaging Dienste usw.).

Es ist eine weitere Aufgabe der vorliegenden Erfindung, ein verbessertes mobiles Endgerät zur Verwaltung mehrerer Subskriptionen insbesondere zur Verwaltung von Diensten von zwei, drei, vier oder mehr Subskriptionen in einem mobilen Kommunikationsnetzwerk zur Verfügung zu stellen.

Das mobile Endgerät umfasst eine Subskriptionsverwaltungsanwendung. Die Subskriptionsverwaltungsanwendung ist eingerichtet, eine erste Subskription und eine zweite Subskription in einer Subskriptionsverwaltungseinheit eines mobilen Kommunikationsnetzwerkes zu registrieren. Die Subskriptionsverwaltungsanwendung ist eingerichtet eine Schaltung eines Dienstes für die erste Subskription durch die zweite Subskription mittels der Subskriptionsverwaltungseinheit unabhängig von einem Aktivitätsstatus der ersten Subskription freizugeben.

Die Subskriptionsverwaltungsanwendung ist zum Beispiel eine Applikation, die in einer Speichereinheit (zum Beispiel Halbleiterspeicher) des mobilen Endgerätes oder einer mit dem mobilen Endgerät gekoppelten Speicherkarte (SIM, USIM, Smartcard usw.) abgespeichert ist. Die Funktionen der Subskriptionsverwaltungsanwendung werden mittels einer Datenverarbeitungseinheit (Prozessor, Mikroprozessor usw.) des mobilen Endgerätes oder einer mit dem mobilen Endgerät gekoppelten Speicherkarte durchgeführt. Die Subskriptionsverwaltungsanwendung ermöglicht es zwei, drei, vier oder mehr Subskriptionen eines mobilen Kommunikationsnetzwerkes die einem oder mehreren Nutzern zugeordnet sind zu verwalten. Die Subskription können dabei auf einem Teilnehmeridentifizierungsmoduls gespeichert sein, dass mittels einer Hardwareschnittstelle mit dem mobilen Endgerät gekoppelt wird) SIM, USIM usw.) oder in der Speichereinheit des mobilen Endgerätes in der Speicherstruktur einer eSIM hinterlegt sein. Das mobile Endgerät ist dazu eingerichtet mit der Subskriptionsverwaltungseinheit mittels der jeweils zur Verfügung stehenden mobilen Kommunikationstechnologien (zellulares Mobilfunknetz, WiFi, Bluetooth usw.) in Verbindung zu treten. Die Subskriptionsverwaltungsanwendung ermöglicht es, mittels einer Darstellungseinheit (z. B. Touchscreen) des mobilen Endgerätes die der jeweiligen Subskription zugeordneten Dienste mittels der Subskriptionsverwaltungseinheit zu verwalten. Die in der Subskriptionsverwaltungseinheit gespeicherten und freigegebenen Subskriptionen können ausgewählt werden, und die zugeordneten Dienste können in der zuvor geschilderten Weise freigeschaltet bzw. umgeschaltet werden.

Es ist eine weitere Aufgabe der vorliegenden Erfindung, eine Subskriptionsverwaltungseinheit zur Verwaltung mehrerer Subskriptionen in einem mobilen Kommunikationsnetzwerk zur Verfügung zu stellen. Die Subskriptionsverwaltungseinheit ist eingerichtet, eine erste Subskription und eine zweite Subskription zu registrieren. Die Subskriptionsverwaltungseinheit ist weiter eingerichtet, eine Schaltung eines Dienstes für die erste Subskription durch die zweite Subskription unabhängig von einem Aktivitätsstatus der ersten Subskription einzurichten.

Die Substitutionsverwaltungseinheit umfasst eine oder mehrere Netzwerkeinheiten des mobilen Kommunikationsnetzwerkes oder eines mit diesem mobilen Kommunikationsnetzwerk verbunden Kommunikationsnetzwerks. Mittels der Subskriptionsverwaltungseinheit können zwei, drei, vier oder mehr Subskriptionen eines oder mehrerer Nutzer, die auf einem oder mehreren Endgeräten verwendet werden in der zuvor geschilderten Weise geschaltet oder umgeschaltet werden. Nach einer einmaligen Registrierung der zu diesem Zeitpunkt vorzugsweise aktiven Subskription kann diese Subskription auch im nicht aktivierten Zustand verwaltet werden, indem in der zuvor geschilderten Weise durch eine dazu autorisierte andere Subskription Dienste geschaltet werden. Die Schaltung der Dienste kann dabei in der zuvor geschilderten Weise von einer Autorisierung abhängig gemacht werden.

Es ist eine weitere Aufgabe der vorliegenden Erfindung, ein System zur Verwaltung mehrerer Subskriptionen in einem mobilen Kommunikationsnetzwerk zur Verfügung zu stellen. Das System umfasst das zumindest eines der zuvor beschriebenen mobilen Endgeräte und die zuvor beschriebene Subskriptionsverwaltungseinheit.

Es ist eine weitere Aufgabe der vorliegenden Erfindung, ein Computerprogrammprodukt zur Verwaltung mehrerer Subskriptionen in einem mobilen Kommunikationsnetzwerk zur Verfügung zu stellen. Das Computerprogrammprodukt kann direkt in eine Speichereinheit eines zuvor beschriebenen mobilen Endgerätes geladen werden. Das Computerprogrammprodukt umfasst Softwareabschnitte, mit denen das zuvor geschilderte Verfahren ausgeführt werden kann, wenn das Computerprogrammprodukt auf dem zuvor geschilderten mobilen Endgerät ausgeführt wird. Das Computerprogrammprodukt kann zum Beispiel in Form der zuvor geschilderten Applikation bzw. Subskriptionsverwaltungsanwendung auf dem mobilen Endgerät realisiert werden.

Das Computerprogrammprodukt (Subskriptionsverwaltungsanwendung bzw. Applikation) kann es optional ermöglichen Einstellungen für die verschiedenen Subskriptionen und zugeordneten Dienste zu programmieren, so dass die Schaltung von Diensten zum Beispiel in Abhängigkeit von der Tageszeit, Wochentag usw. unabhängig vom Aktivitätsstatus des jeweiligen Dienstes freigegeben bzw. geändert werden können.

Die Speichereinheit kann jede Form insbesondere digitaler Speicher wie z.B. einen oder mehrere Halbleiterspeicher umfassen. Zur Ausführung der Softwareabschnitte weist das mobile Endgerät eine oder mehrere Datenverarbeitungseinheiten (Prozessor, Mikroprozessor usw.) der zuvor beschriebenen Art auf.

### Kurze Beschreibung der Abbildungen

Diese und andere Aspekte der Erfindung werden im Detail in den Abbildungen wie folgt gezeigt.
Fig. 1 zeigt eine erste Ausführungsform mit mehreren Subskriptionen auf einem mobilen Endgerät
Fig. 2 zeigt eine zweite Ausführungsform mit mehreren Subskriptionen auf zwei verschiedenen mobilen Endgeräten

Die in den Figuren dargestellten Ausführungsformen sind beispielhaft für eine Vielzahl von alternativ möglichen Ausführungsformen zu verstehen, die ebenfalls von den Patentansprüchen umfasst sind.

Die Darstellungen in den Figuren sind schematisch und nicht notwendigerweise maßstabsgetreu.

### Detaillierte Beschreibung der Ausführungsbeispiele

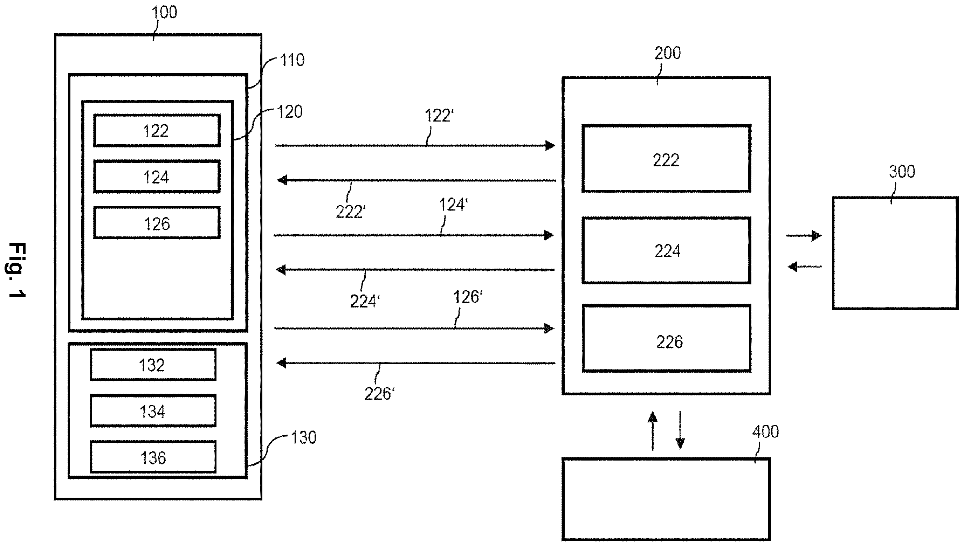

Fig. 1 zeigt eine erste Ausführungsform mit mehreren Subskriptionen auf einem mobilen Endgerät 100. Das erste mobile Endgerät 100 umfasst eine Darstellungseinheit 110, mit der eine Subskriptionsverwaltungsanwendung 120 für einen Nutzer grafisch dargestellt werden kann. Die grafische Repräsentation der Subskriptionsverwaltungsanwendung 120 ermöglicht es Verwaltungsabbilder mehrerer Subskriptionen 122,124, 126 von innerhalb eines Teilnehmeridentifizierungsmoduls 130 abgespeicherter Subskriptionen 132, 134, 136 zu verwalten. Das Teilnehmeridentifizierungsmodul 130 ist in diesem Fall als eingebettetes Teilnehmeridentifizierungsmodul (emedded SIM oder electronic SIM) im Speicherbereich einer Speichereinheit des ersten mobilen Endgerätes 100 ausgestaltet. Das mobile Endgerät 100 kommuniziert mittels eines Funkmoduls mit einer Subskriptionsverwaltungseinheit 200. Die Substitutionsverwaltungseinheit 200 ist wiederum dazu eingerichtet mit einem Heimatregister 300 zu kommunizieren dass einem mobilen Kommunikationsnetzwerk 400 zugeordnet ist. Im Heimatregister 300 sind unter Anderem die Subskriptionen 132, 134, 136 des mobilen Kommunikationsnetzwerkes 400 gespeichert. Die Subskriptionsverwaltungsanwendung 120 sendet mittels des mobilen Endgerätes Registrierungsanfragen für die erste, zweite und dritte Subskription 122', 124', 126' an die Subskriptionsverwaltungseinheit 200. In der Subskriptionsverwaltungseinheit 200 wird als Reaktion auf die jeweilige Registrierungsanfrage eine Registrierung der ersten Subskription 222, eine Registrierung der zweiten Subskription 224 und eine Registrierung der dritten Subskription 226 in einer zugeordneten Speichereinheit der Subskriptionsverwaltungseinheit 200 angelegt. Diese Registrierungen 222, 224, 226 werden gegebenenfalls mittels eines weitergehenden Datenaustausches mit dem Heimatsregister 300 bzw. mit dem mobilen Kommunikationsnetzwerk 400 angelegt. Die Subskriptionsverwaltungseinheit 200 sendet in Reaktion auf die Registrierungen 222, 224, 226 Registrierungsbestätigungen 222', 224', 226' für die erste Subskription, die zweite Subskription und die dritte Subskription. Dieser hier in Fig. 1 dargestellte Prozess erfolgt bei der ersten Registrierung für die jeweilige Subskription 132, 134, 136, wenn die jeweilige Subskription 132, 134, 136 im ersten mobilen Endgerät aktiviert ist. Die erstmalige Registrierung der Subskription 132 erfolgt somit dann, wenn die Registrierung 132 aktiviert ist und die beiden anderen Subskriptionen 134, 136 inaktiv sind. Nach der erstmaligen Registrierung der Subskriptionen 132, 134, 136 in der Subskriptionsverwaltungseinheit in 200 kann der Nutzer mittels der Subskriptionsverwaltungsanwendung 120 zum Beispiel bei aktivierter erster Subskription 132 das Verwaltungsabbild der inaktiven zweiten Subskription 124 mittels der Darstellungseinheit 110 auswählen. Dem Nutzer wird sodann dargestellt, ob und welche Dienste für die zweite Subskription 124 geschaltet sind. Der Nutzer kann z. B. für den Fall, dass für die zweite Subskription 124 keine Rufweiterleitung geschaltet ist, eine Rufweiterleitung für die zweite Subskription 124 auf die dritte inaktive Subskription 126 auswählen und schalten. Die Schaltung der Rufweiterleitung wird an die Subskriptionsverwaltungseinheit 200 übermittelt und dort in der Registrierung der zweiten Subskription 224 gespeichert, da in der Subskriptionsverwaltungseinheit 200 hinterlegt ist, dass die erste Subskription 132 autorisiert ist, Rufweiterleitungen für die zweite und dritte Subskription 134, 136 zu schalten. Kommunikationsanfragen für die zweite Subskription 134 werden sodann an die dritte Subskription 136 weitergeleitet. Zusätzlich kann der Nutzer z.B. für die dritte Subskription 136 mittels der Subskriptionsverwaltungsanwendung 120 in der zuvor beschriebenen Weise eine automatische Antwort für die dritte inaktive Subskription 136 schalten, so dass jede oder eine bestimmte Auswahl von Kommunikationen (z.B. in Abhängigkeit vom Nutzer der die Kommunikationsanfrage an den Nutzer der dritten Subskription 136 bzw. der auf die dritte Subskription 136 weitergeleiteten zweiten Subskription 134), die für die dritte Subskription 136 eingehen, eine automatische Antwort erhalten.

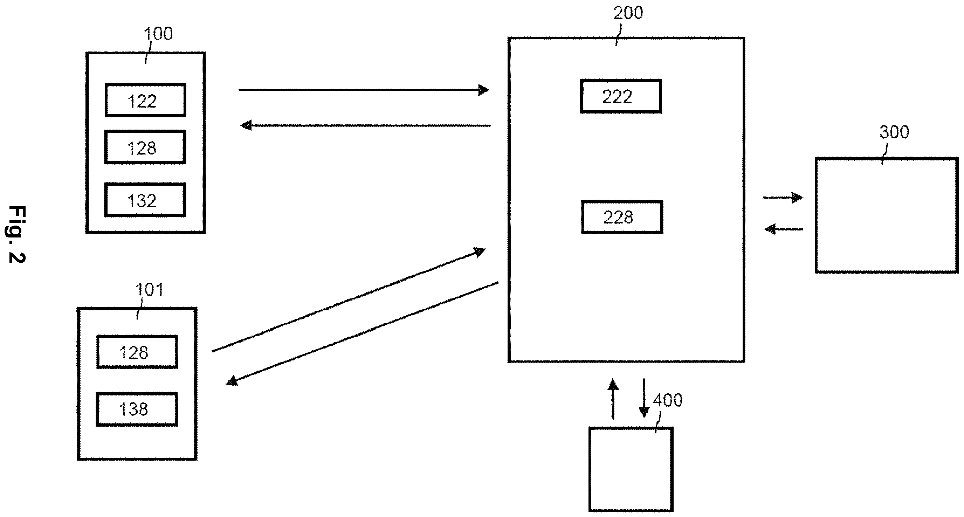

Fig. 2 zeigt eine zweite Ausführungsform mit mehreren Subskriptionen auf zwei verschiedenen mobilen Endgeräten 100, 101. Diese zweite Ausführungsform kann ohne Einschränkung mit der ersten Ausführungsform kombiniert werden. Der Aufbau des ersten mobilen Endgerätes 100 und des zweiten mobilen Endgerätes 101 entspricht dabei dem zuvor im Zusammenhang mit der Fig. 1 diskutierten Aufbau. Dabei ist es unerheblich, ob eine Subskription auf einem physikalischen Teilnehmeridentifizierungsmodul oder auf einem im Speicher des jeweiligen mobilen Endgerätes 100, 101 eingebetteten Teilnehmeridentifizierungsmoduls gespeichert ist. Das erste mobile Endgerät 100 weist eine erste Subskription 132 auf, und das zweite mobile Endgerät 101 weist eine vierte Subskription 138 auf. Das erste mobile Endgerät 100 weist zudem eine Subskriptionsverwaltungsanwendung der zuvor beschriebenen Art auf, in der ein Verwaltungsabbild der ersten Subskription 122 und ein Verwaltungsabbild der vierten Subskription 128 angelegt ist. Die erstmalige Registrierung der ersten Subskription 222 und der vierten Subskription 228 in der Subskriptionsverwaltungseinheit 200 erfolgt gemäß der in Fig. 1 beschriebenen Weise. Alternativ kann vorgesehen sein, dass die Registrierung der vierten Subskription 228 durch die Subskriptionsverwaltungsanwendungen 120 des ersten mobilen Endgerätes 100 angefragt wird und durch einen Informationsaustausch mit dem zweiten mobilen Endgerät 101 autorisiert wird. Die Registrierung muss somit nicht zwingend von dem mobilen Endgerät 100, 101 ausgehen, in dem die jeweilige Subskription 132, 138 hinterlegt ist. Der Nutzer des ersten mobilen Endgerätes schaltet nun mittels des Verwaltungsabbildes 128 und der Subskriptionsverwaltungseinheit 200 einen Dienst für die vierte Subskription 138 die in dem zweiten mobilen Endgerät 101 hinterlegt ist. Ein Beispiel wäre, dass das zweite mobile Endgerät 101 einem Familienmitglied gehört und zum Beispiel vor einer Reise vergessen wurde. Der Nutzer des ersten mobilen Endgerätes 100 kann nun unabhängig davon, ob das zweite mobile Endgerät 101 und insbesondere die vierte Subskription 138 aktiv ist z.B. eine Rufweiterleitung mittels der Registrierungen der ersten und der vierten Subskription 222, 228 in der Subskriptionsverwaltungseinheit 200 auf die erste Subskription 132 schalten bzw. die Schaltung freigeben. Der Nutzer des ersten mobilen Endgerätes 100 kann sodann Kommunikationsanfragen für die vierte Subskription 138 entgegennehmen bzw. beim Eingang solcher Kommunikationsanfragen das erste mobile Endgerät 100 an den Nutzer des zweiten mobilen Endgerätes 101 weitergeben. Alternativ kann die Schaltung des Dienstes für die vierte Subskription 138 von einer Autorisierung des Nutzers des zweiten mobilen Endgerätes 101 abhängig gemacht werden. Es kann in diesem Zusammenhang vorgesehen sein, dass die Autorisierung mittels Datenaustausch zwischen der Subskriptionsverwaltungseinheit 200 und dem zweiten mobilen Endgerät 101 durchgeführt wird. Der Nutzer des zweiten mobilen Endgerätes 101 muss in diesem Fall das zweite mobile Endgerät 101 aktiviert haben und in der Lage sein Nachrichten bzw. Informationen mit der Subskriptionsverwaltungseinheit 200 auszutauschen. Alternativ oder zusätzlich kann vorgesehen sein, dass eine Autorisierungsanfrage auch mittels der Subskriptionsverwaltungsanwendung 120 des ersten mobilen Endgerätes 100 beantwortet werden kann. Die Subskriptionsverwaltungseinheit 200 schickt in diesem Fall eine Autorisierungsanfrage an das erste mobile Endgerät 100 (bzw. alle mobilen Endgeräte, die für diesen Zweck in der Subskriptionsverwaltungseinheit 200 hinterlegt sind) und der Nutzer des ersten mobilen Endgerätes 100 kann die Schaltung des Dienstes zum Beispiel mittels eines Freischaltcodes autorisieren. Der Freischaltcode kann zum Beispiel während der ersten Registrierung der vierten Subskription 138 in der Subskriptionsverwaltungseinheit 200 mittels des zweiten mobilen Endgerätes 101 festgelegt werden. Die Schaltung des Dienstes für die vierte Subskription 138 kann somit nur aktiviert werden, wenn der Nutzer des ersten mobilen Endgerätes 100 Zugriff auf den Freischaltcode hat.

Die grundlegende Idee der vorliegenden Erfindung besteht darin mittels in einer Subskriptionsverwaltungseinheit 200 hinterlegten Registrierungen von Subskriptionen 222, 224, 226, 228 die Schaltung von Diensten für Subskriptionen 132, 134, 136, 138 in mobilen Endgeräten 100, 101 unabhängig davon zu ermöglichen, ob die jeweilige Subskription 132, 134, 136, 138 im zugehörigen mobilen Endgeräten 100, 101 aktiv oder inaktiv ist. Dies kann mit Hilfe einer entsprechenden Subskriptionsverwaltungsanwendung 120 geschehen die auf den jeweiligen mobilen Endgeräten gespeichert ist. Die Subskriptionsverwaltungsanwendung 120 weist zu diesem Zweck Verwaltungsabbilder der Subskriptionen 122,124, 126, 128 auf. Mit diesen Verwaltungsabbilder sind die Möglichkeiten der Schaltung der verschiedenen Dienste verknüpft, so dass diese Möglichkeiten angezeigt werden können und der Nutzer die Schaltung der Dienste auf einfache Weise freigeben kann, ohne Details über die Datenstruktur bzw. Organisationsstrukturen des jeweiligen mobilen Endgerätes 100, 101 kennen zu müssen. Die Erfindung kann insbesondere vorteilhaft in Kombination mit eingebetteten Teilnehmeridentifizierungsmodulen verwendet werden, die auf einfache Weise die Einrichtung mehrerer Subskription auch auf einem einzigen mobilen Endgerät 100, 101 ermöglichen. Die Freigabe der Schaltung von Diensten ist dabei nach einer ersten Registrierung bei vorzugsweise aktiver Subskription bei jeder weiteren Registrierung (zum Beispiel nach dem Anschalten eines mobilen Endgerätes) unabhängig vom Aktivitätsstatus der jeweiligen Subskription möglich.

Obwohl die Erfindung in den Zeichnungen und der vorausgegangenen Darstellung im Detail beschrieben wurde, sind die Darstellungen illustrativ und beispielhaft und nicht einschränkend zu verstehen. Die Erfindung ist nicht auf die erläuterten Ausführungsbeispiele beschränkt.

Weitere Varianten der Erfindung und ihre Ausführung ergeben sich für den Fachmann aus der vorangegangenen Offenbarung, den Figuren und den Patentansprüchen.

In den Patentansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

### Liste der Bezugszeichen

- 100: Erstes mobiles Endgerät
- 101: Zweites mobiles Endgerät
- 110: Darstellungseinheit
- 120: Subskriptionsverwaltungsanwendung
- 122: Verwaltungsabbild erster Subskription
- 122': Registrierungsanfrage erste Subskription
- 124: Verwaltungsabbild zweiter Subskription
- 124': Registrierungsanfrage zweite Subskription
- 126: Verwaltungsabbild dritter Subskription
- 126': Registrierungsanfrage dritte Subskription
- 128: Verwaltungsabbild vierter Subskription
- 130: Teilnehmeridentifizierungsmodul
- 132: Erste Subskription
- 134: Zweite Subskription
- 136: Dritte Subskription
- 138: Vierte Subskription
- 200: Subskriptionsverwaltungseinheit
- 222: Registrierung erste Subskription
- 222': Registrierungsbestätigung erste Subskription
- 224: Registrierung zweite Subskription
- 224': Registrierungsbestätigung zweite Subskription
- 226: Registrierung dritte Subskription
- 226': Registrierungsbestätigung dritte Subskription
- 228: Registrierung vierte Subskription
- 300: Heimatregister
- 400: Mobiles Kommunikationsnetzwerk

## Patentansprüche

1. Ein Verfahren zur Verwaltung von Subskriptionen in mobilen Kommunikationsnetzwerken durch ein mobiles Endgerät (100, 101), wobei das Verfahren die folgenden Schritte umfasst:
- Registrieren einer ersten Subskription (132) in einer Subskriptionsverwaltungseinheit (200) eines mobilen Kommunikationsnetzwerkes (400, 401),
- Registrieren einer zweiten Subskription (134) in der Subskriptionsverwaltungseinheit (200),
- Freigeben durch das mobile Endgerät (100, 101) einer Schaltung eines Dienstes für die erste Subskription (132) mittels der Subskriptionsverwaltungseinheit (200) durch die zweite Subskription (134) unabhängig von einem Aktivitätsstatus der ersten Subskription (132).

2. Das Verfahren gemäß Anspruch 1, wobei das Verfahren den zusätzlichen Schritt umfasst:
- Freigeben durch das mobile Endgerät (100, 101) einer Schaltung eines Dienstes für die zweite Subskription (134) durch die erste Subskription (132) mittels der Subskriptionsverwaltungseinheit (200) unabhängig von einem Aktivitätsstatus der zweiten Subskription (134).

3. Das Verfahren gemäß einem der vorangehenden Ansprüche, wobei die erste Subskription (132) einem ersten Nutzer zugeordnet ist, und die zweite Subskription (134) einem zweiten Nutzer zugeordnet ist, wobei der zweite Nutzer sich vom ersten Nutzer unterscheidet.

4. Das Verfahren gemäß Anspruch 3, wobei das Verfahren den zusätzlichen Schritt umfasst:
- Autorisieren der Freigabe des Dienstes für die erste Subskription (132) in der Subskriptionsverwaltungseinheit (200).

5. Das Verfahren gemäß einem der Ansprüche 1 und 2, wobei die erste Subskription (132) und die zweite Subskription (134) demselben Nutzer zugeordnet sind.

6. Das Verfahren gemäß einem der vorangehenden Ansprüche, wobei das Verfahren den weiteren Schritt umfasst:
- Freigeben des Dienstes für die erste Subskription (132) durch ein das mobile Endgerät (100), wobei die erste Subskription (132) und die zweite Subskription (134) dem mobilen Endgerät (100) zugeordnet sind.

7. Das Verfahren gemäß Anspruch 6, wobei die erste und die zweite Subskription in einem eingebetteten Teilnehmeridentifizierungsmodul des mobilen Endgerätes angelegt sind.

8. Das Verfahren gemäß einer der Ansprüche 1-5, wobei das Verfahren den weiteren Schritt umfasst:
- Freigeben des Dienstes für die erste Subskription (132) durch das mobile Endgerät (101), wobei die erste Subskription (132) einem anderen mobilen Endgerät (100) zugeordnet ist und die zweite Subskription (134) dem mobilen Endgerät (101) zugeordnet ist.

9. Das Verfahren gemäß einer der vorangehenden Ansprüche, wobei die Schaltung des Dienstes für die erste Subskription (132) die Schaltung einer Rufweiterleitung für die erste Subskription (132) umfasst.

10. Ein mobiles Endgerät (100, 101) umfassend eine Subskriptionsverwaltungsanwendung (120), wobei die Subskriptionsverwaltungsanwendung (120) eingerichtet ist, eine erste Subskription (132) und eine zweite Subskription (134) in einer Subskriptionsverwaltungseinheit (200) eines mobilen Kommunikationsnetzwerkes (400, 401) zu registrieren, und wobei die Subskriptionsverwaltungsanwendung (120) eingerichtet ist eine Schaltung eines Dienstes für die erste Subskription (132) durch die zweite Subskription (134) mittels der Subskriptionsverwaltungseinheit (200) unabhängig von einem Aktivitätsstatus der ersten Subskription (132) freizugeben.

11. Ein System umfassend das mobiles Endgerät (100, 101) gemäß Anspruch 10 und eine Subskriptionsverwaltungseinheit (200), wobei die Subskriptionsverwaltungseinheit (200) eingerichtet ist eine erste Subskription (132) und eine zweite Subskription (134) zu registrieren, und wobei die Subskriptionsverwaltungseinheit (200) weiter eingerichtet ist, eine Schaltung eines Dienstes für die erste Subskription (132) durch die zweite Subskription (134) unabhängig von einem Aktivitätsstatus der ersten Subskription (132) einzurichten.

12. Ein Computerprogrammprodukt das direkt in eine Speichereinheit des mobilen Endgerätes (100, 101) gemäß Anspruch 10 geladen werden kann und Softwareabschnitte umfasst, mit denen das Verfahren gemäß einem der Ansprüche 1 bis 9 ausgeführt werden kann, wenn das Computerprogrammprodukt auf dem mobilen Endgerät (100, 101) gemäß Anspruch 10 ausgeführt wird.
